# EUROPEAN PATENT APPLICATION

(11) **EP 2 838 177 A1**
(43) Date of publication of application: **18.02.2015**
(21) Application number: 13775242.4
(22) Date of filing: 07.03.2013
(51) Int. Cl.: H02J 13/00, G06Q 50/06, H02J 3/00

(54) **ENERGY MANAGEMENT DEVICE AND ENERGY MANAGEMENT SYSTEM**

(30) Priority: 09.04.2012 JP 2012088837
(71) Applicant: Panasonic Intellectual Property Management Co., Ltd., Osaka-shi, Osaka 540-6207 (JP)
(72) Inventor: TAKEHARA, Kiyotaka, Osaka 540-6207 (JP)
(74) Representative: Appelt, Christian W.
(86) International application number: PCT/JP2013/001425
(87) International publication number: WO 2013/153737

(57) **Abstract**

A controller includes a method storage part, an execution part and a selection part. The method storage part is configured to store reduction methods for reducing amounts of electric powers to be consumed, which are made to correspond to branch circuits or load apparatuses individually. The execution part is configured to execute limitation of the amounts of electric powers to be consumed. The selection part is configured to make a user select the reduction methods to be stored in the method storage part. The execution part is configured to present, in response to a reduction request, to the user, the reduction methods according to a correspondence table stored in the method storage part. The selection part is configured to make the user select, from a plurality of predetermined reduction methods, the reduction methods to be stored in the method storage part and made to correspond to the branch circuits or the load apparatuses individually.

## Description

### TECHNICAL FIELD

The invention relates to an energy management device and an energy management system, which are used to limit an amount of electric power to be consumed in a power consumer's facility.

### BACKGROUND ART

Conventionally, there has been proposed a technique for controlling a load apparatus according to a condition of the load apparatus used by a consumer in order to limit an amount of electric power to be consumed in the consumer's facility (e.g., JPH11-313441A).

The above-mentioned document discloses a control device (DSM (Demand Side Management) control device) that is connected to a home network to which load apparatuses (facility apparatuses) are connected. The control device is configured to control each load apparatus through receiving a DSM command of directing a limitation of power consumption from a DSM command center managed by an electric power company. Here, the control device is configured to obtain, via the home network, a current value or an electric power amount detected by a current sensor attached to a distribution board. The DSM command is provided as an upper limit of consumption current for each prescribed time zone for example. The control device is configured to reduce an operation capacity of each load apparatus or stop the operation thereof so that the detected current value does not exceed the upper limit provided in the DSM command. At this time, the control device is configured to control each load apparatus so as to optimally achieve the DSM command according to the condition of each load apparatus.

Incidentally, for example, the following methods are considered for limiting the amount of electric power to be consumed in the consumer's facility: a method of stopping operation of the load apparatus or reducing the operation capacity thereof; and a method of limiting an operating time period of the load apparatus. However, the most desirable method among the methods changes depending on an actual way of using the load apparatus. Generally, ways of using load apparatuses are not uniform, and the ways are different depending on the load apparatuses. Also, the ways are different depending on users.

However, in the technique described in the above document, a load apparatus is only controlled according to the condition of the load apparatus for a demand request (the DSM command), and accordingly, information other than the condition of the load apparatus (that is, a way of using the load apparatus, as described above) is not reflected in the control of the load apparatus. For this reason, there is a possibility that the control device in the above document may not give a user satisfaction regarding the operation (control) for limiting the amount of electric power to be consumed in the consumer's facility. For example, an electric power company may make the following request: "we ask for your cooperation in saving an electric power amount of 10% or more between 9 a.m. and 9 p.m. on weekdays from March 1 to May 31". However, it is hard to limit the amount of electric power to be consumed in the consumer's facility over such a long time period while giving the user satisfaction.

### DISCLOSURE OF THE INVENTION

It is an object of the present invention to provide an energy management device and an energy management system, which can easily give a user satisfaction regarding an operation for limiting an amount of electric power to be consumed in a consumer's facility.

An energy management device according to the present invention includes an acquisition part, a request input part, a method storage part, an execution part, and a selection part. The acquisition part is configured to acquire, from a measuring device, measured values, as respective power consumption amounts corresponding to branch circuits or load apparatuses in a consumer's facility. The request input part is configured to receive a reduction request for requesting a reduction in an amount of electric power to be consumed in the consumer's facility. The method storage part is configured to store reduction methods for reducing amounts of electric powers to be consumed in the branch circuits or the load apparatuses. The reduction methods are made to correspond to the branch circuits or the load apparatuses individually. The execution part is configured to execute, in response to the reduction request, at least one of presentation of the reduction methods stored in the method storage part, and control of the branch circuits or the load apparatuses according to the reduction methods. The selection part is configured to make a user select, from a plurality of predetermined reduction methods, the reduction methods to be stored in the method storage part and made to correspond to the branch circuits or the load apparatuses individually.

The energy management device preferably further includes a history storage part configured to store history data of the respective power consumption amounts corresponding to the branch circuits or the load apparatuses. In this case, the execution part is preferably configured to, when the reduction methods selected by the user are stored in the method storage part, as a trigger, determine respective setting values corresponding to the branch circuits or the load apparatuses so as to achieve the reduction request, with the history data stored in the history storage part, as a reference value. The selection part is preferably configured to present the setting values to the user.

In the energy management device, preferably, the reduction request includes at least information related to an object time zone in which the reduction in electric power to be consumed is requested. The execution part is preferably configured to extract, from the history storage part, the history data in a time zone that agrees with the object time zone, and determine the setting values with the extracted history data as the reference value.

In the energy management device, preferably, the plurality of predetermined reduction methods includes a method of shifting a timing, at which electric power is consumed by a corresponding branch circuit or load apparatus, from a time zone, in which the reduction in electric power to be consumed is requested in the reduction request, to another time zone.

In the energy management device, more preferably, the plurality of predetermined reduction methods includes a method of setting an upper limit to a magnitude of electric power to be consumed by a corresponding branch circuit or load apparatus.

In the energy management device, more preferably, the plurality of predetermined reduction methods includes a method of setting an upper limit to a length of a time period during which electric power is consumed by a corresponding branch circuit or load apparatus.

In the energy management device, more preferably, the plurality of predetermined reduction methods includes a method of setting an upper limit to an amount of electric power to be consumed by a corresponding branch circuit or load apparatus.

In the energy management device, more preferably, the plurality of predetermined reduction methods includes a method of limiting an operation mode of a corresponding load apparatus.

An energy management system according to the present invention includes: a measuring device to be attached to a distribution board installed in a consumer's facility, or load apparatuses to be used in the consumer's facility, to measure an amount of electric power; and the above-mentioned energy management device.

According to the present invention, the selection part is configured to make a user select, from the plurality of predetermined reduction methods, the reduction methods to be stored in the method storage part and made to correspond to the branch circuits or the load apparatuses individually, and therefore, it is possible to easily give the user satisfaction regarding an operation for limiting an amount of electric power to be consumed in the consumer's facility.

### BRIEF DESCRIPTION OF THE DRAWINGS

Preferred embodiments of the present invention will now be described in further details. Other features and advantages of the present invention will become better understood with regard to the following detailed description and accompanying drawings where:
Fig. 1 is a block diagram illustrating a controller in an energy management device according to First Embodiment;
Fig. 2 is a configuration diagram illustrating one example of an energy management system according to the First Embodiment;
Fig. 3 is a configuration diagram illustrating main portions of the energy management system according to the First Embodiment;
Fig. 4 is a diagram illustrating an example of data stored in a request storage part, used in the First Embodiment;
Fig. 5 is a diagram illustrating an example of data stored in a method storage part, used in the First Embodiment;
Fig. 6 is a diagram illustrating an example of data stored in a history storage part, used in the First Embodiment;
Fig. 7 is a diagram illustrating an example of an image displayed on a setting screen, used in the First Embodiment; and
Fig. 8 is a diagram illustrating an example of a content displayed on a display screen of a washing machine, used in the First Embodiment.

### BEST MODE FOR CARRYING OUT THE INVENTION

In Embodiments below, as one example, a case where an energy management system is used for a general detached house as a power consumer's facility will be explained. However, it is not limited to such a detached house. The energy management system may be used for a dwelling unit of an apartment house, an office, a shop or the like. In any cases, if a consumer is conscious of a reduction in an amount of electric power to be consumed, it is possible to limit the amount by introducing the energy management system described below.

### (First Embodiment)

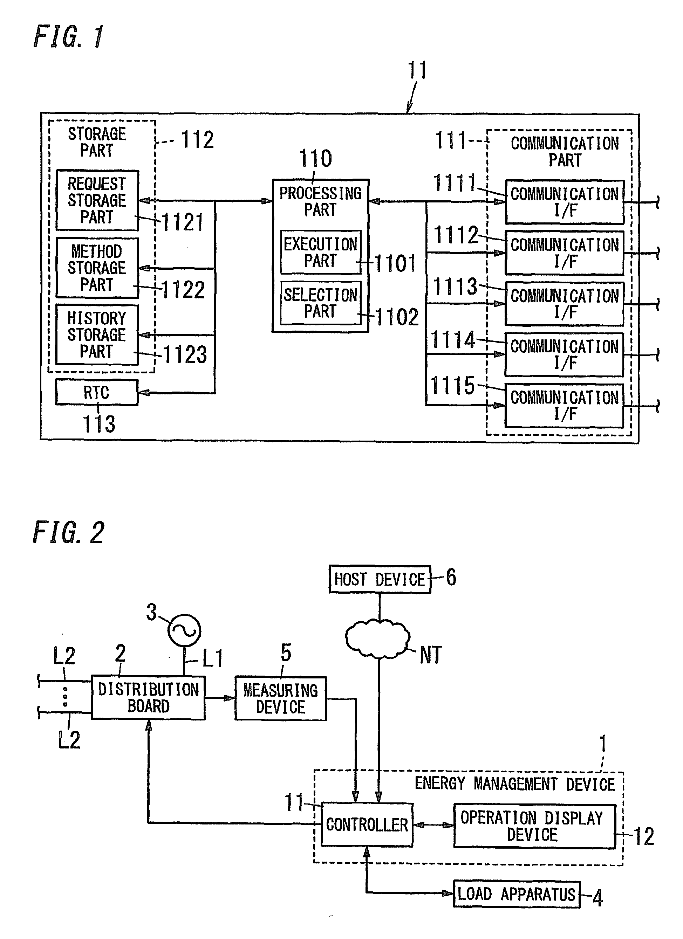

As shown in Fig. 2, in a consumer's house, a distribution board 2 is disposed, and a power line L1 and plural power lines L2 are connected to this distribution board 2. The power line L1 is for supplying electric power received from a power supply system 3 as a commercial power supply, and the plural power lines L2 are for supplying the electric power to load apparatuses 4 disposed in the house. However, in Fig. 2, illustration of the load apparatuses 4 connected to the plural power lines L2 is omitted. In addition, although not shown in Fig. 2 for simplification, a single load apparatus 4 in Fig. 2 is actually connected to the distribution board 2 via a power line L2. An energy management system according to the present embodiment includes: a measuring device 5 that is attached to the distribution board 2 and configured to measure respective power consumption amounts corresponding to branch circuits or the load apparatuses 4; and an energy management device 1 for acquiring, as measured values, the respective power consumption amounts measured by the measuring device 5.

The energy management device 1 is further configured to be capable of communicating with a host device 6 via a communication network NT as the Internet. The host device 6 may be a computer server for example, and may be managed (operated) by an electric power company that generates and supplies electric power, or a service provider that manages the electric power instead of the electric power company. The host device 6 has a function of reporting, to the energy management device 1, a reduction request for requesting a reduction in an amount of electric power to be consumed in the consumer's house, in response to a condition of electric power supplied from the electric power company. The reduction request mentioned here may include, for example, a request: "we ask for your cooperation in saving an electric power amount of 10% or more between 9 a.m. and 9 p.m. on weekdays from March 1 to May 31" from the electric power company.

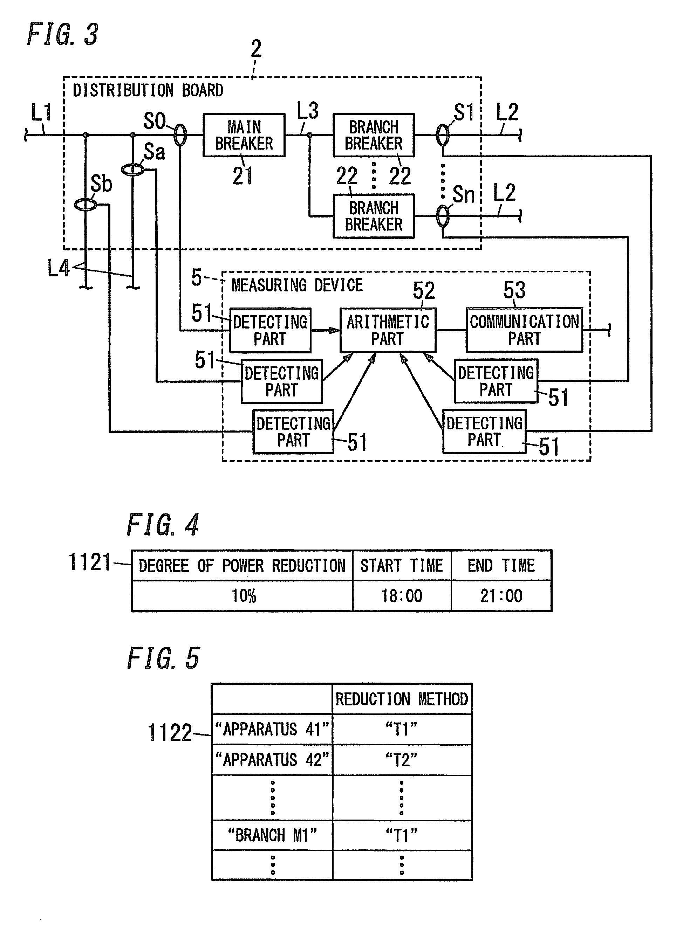

As shown in Fig. 3, the distribution board 2 includes: a main breaker 21 that is connected to the power line L1 for supplying the electric power received from the power supply system 3; and plural branch breakers 22 that are connected to a secondary side of the main breaker 21 via a conductor L3. The load apparatuses 4 (not shown in Fig. 3) are connected to secondary sides of the branch breakers 22 via the plural power lines L2, respectively. In the example of Fig. 3, in addition to the power line L1, power lines L4 (two power lines in Fig. 3) are connected to a primary side of the main breaker 21. Through the power lines L4, a private power generator such as a solar power generator or a fuel cell, a power storage device and the like are connected to the distribution board 2. Here, the power line L1 corresponds to a main circuit, and each power line L2 corresponds to a branch circuit.

As shown in Fig. 3, the measuring device 5 includes two or more detecting parts 51 and an arithmetic part 52. The respective detecting parts 51 are configured to detect an output of a power sensor S0 installed on the power line L1 and outputs of power sensors S1 to Sn respectively installed on the plural power lines L2. The arithmetic part 52 is configured to calculate respective amounts of electric powers that pass through the power line L1 and power lines L2 based on outputs of the detecting parts 51. The measuring device 5 further includes a communication part 53 that is configured to transmit, to the energy management device 1, information related to the electric power amounts calculated by the arithmetic part 52, as measured values.

Also, in the example of Fig. 3, power sensors Sa and Sb are respectively installed on the two power lines L4. The measuring device 5 further includes detecting parts 51 that are configured to respectively detect outputs of the power sensors Sa and Sb, and is configured to calculate, through the arithmetic part 52, respective amounts of electric powers that pass through the two power lines L4. In the present embodiment, current sensors including current transformers are used as the power sensors S0, S1 to Sn, Sa and Sb, in order to simply measure the electric power amounts in the measuring device 5. However, in order to enhance measurement accuracy of the electric power amounts, it is preferred that the power sensors S0, S1 to Sn, Sa and Sb are configured to measure both of current and voltage.

The respective detecting parts 51 have functions of performing: pre-processing, such as offset adjustment, noise elimination or amplification, for outputs of the power sensors S0, S1 to Sn, Sa and Sb; and A/D conversion for converting signals obtained after the pre-processing into digital signals. The arithmetic part 52 is mainly constituted by a device that is configured to operate by executing programs, as a microcomputer. The communication part 53 is preferably configured to perform wireless communication, but may be configured to perform wired communication. The electric power amounts measured by the measuring device 5 are amounts of electric powers during a sampling period (e.g., for one minute). The measuring device 5 sequentially transmits, to the energy management device 1, the electric power amounts for each sampling period, as measured values.

Here, in the shown example, the measuring device 5 is attached to the distribution board 2 and configured to measure, as one unit, an electric power amount corresponding to each of the branch circuits (that is, the power lines L2) connected to the branch breakers 22. However, it is not limited to such a configuration. The measuring device 5 may be attached to the load apparatuses 4 and configured to measure, as one unit, an electric power amount corresponding to each of the load apparatuses 4. Alternatively, the measuring device 5 may be attached to outlets (not shown) connected to the power lines L2 and configured to measure, as one unit, an electric power amount corresponding to each of the outlets.

According to the above-mentioned configuration, the measuring device 5 can measure an amount of electric power that passes through the main circuit (power line L1), and respective amounts of electric powers that pass through the branch circuits (power lines L2) or respective amounts of electric powers that are consumed by the load apparatuses 4. Hereinafter, the amount of electric power passing through the main circuit is referred to as an "electric power amount of the main circuit", and an amount of electric power passing through a branch circuit is referred to as an "electric power amount of a branch circuit", and an amount of electric power consumed by a load apparatus 4 is referred to as an "electric power amount of a load apparatus 4". Here, load apparatuses 4 such as an air-conditioner and an IH cooker are often made to respectively correspond to branch circuits, in one-to-one. In this case, it means that an electric power amount of a branch circuit agrees with an electric power amount of a load apparatus 4. For this reason, hereinafter, in a case where it is not required to distinguish between a branch circuit and a load apparatus 4 in particular, those are described as a "branch circuit" for simplification. In other words, in a case where it is not required to distinguish between an electric power amount of a branch circuit and an electric power amount of a load apparatus 4, those are described as an electric power amount of a branch circuit for simplification.

As shown in Fig. 2, the energy management device 1 includes: a controller 11 that is configured to communicate with the measuring device 5; and an operation display device 12, as a user interface, that is configured to communicate with the controller 11. The operation display device 12 has a function as a display device for displaying information obtained by the controller 11, and a function as an operation device for giving instructions to the controller 11. In the operation display device 12 mentioned here, the display device is formed as a flat panel display, such as a liquid crystal display, and the operation device is formed as a mechanical switch, such as a push-button switch. However, it is not limited to such a configuration. For example, the display device and operation device may be formed as a touch panel. The operation display device 12 further includes circuits for operating the display device and operation device.

As shown in Fig. 1, the controller 11 includes: a processing part 110 that is configured to perform processing for limiting an amount of electric power to be consumed in the consumer's house; a communication part 111 for communicating with other devices; a storage part 112; and a real time clock (RTC) 113 for clocking the present day-time.

The communication part 111 includes a communication interface part 1111, as an acquisition part configured to acquire the measured values from the measuring device 5 by communicating with the measuring device 5. Hereinafter, for simplification, a "communication interface part" is referred to as a "communication I/F". The communication part 111 further includes a communication I/F 1112 for communicating with the operation display device 12, and a communication I/F 1113 connected to the communication network NT for communicating with the host device 6. Here, the energy management device 1 is configured to receive a reduction request for requesting a reduction in an amount of electric power to be consumed in the consumer's house, from the host device 6 via the communication I/F 1113, or from the operation display device 12 via the communication I/F 1112 according to the user's operation to the operation display device 12. Therefore, the reduction request is defined by the user's opinion, or a request from the electric power company or the like. The communication I/F 1113 or the communication I/F 1112 serves as a request input part for receiving the reduction request.

The communication part 111 further includes: a communication I/F 1114 for communicating with the distribution board 2 to remotely control the branch breakers 22 in the distribution board 2; and a communication I/F 1115 for communicating with the load apparatuses 4 to control and monitor the load apparatuses 4.

Here, the storage part 112 includes: a request storage part 1121 that is configured to store the reduction request; a method storage part 1122 that is configured to store reduction methods described later; and a history storage part 1123 that is configured to store history data of the past power consumption amounts and the like.

As shown in Fig. 4, the request storage part 1121 is configured to store, as a specific content, the reduction request that is input to the communication I/F 1113 or the communication I/F 1112 as the request input part, where the specific content includes a degree of the power reduction (e.g., a reduction rate), an object time zone (a start time and an end time) and the like. In the example, a case where the degree is a reduction rate of 10% and the start time is "18:00" and the end time is "21:00" is shown. That is, in the case of this reduction request, an amount of electric power to be consumed in the consumer's house is requested to be reduced by 10% in an object time zone from "18:00" to "21:00".

As shown in Fig. 5, the method storage part 1122 is configured to store the reduction methods for reducing amounts of electric powers to be consumed in the branch circuits or the load apparatuses 4, while the reduction methods are made to correspond to the branch circuits or the load apparatuses 4 individually. Hereinafter, a table as shown in Fig. 5 is referred to as a "correspondence table", in which reduction methods are made to correspond to branch circuits or load apparatuses 4 in one-to-one. That is, methods, each of which is for reducing at least one of an electric power amount of a branch circuit and an electric power amount of a load apparatus 4, are stored as the reduction methods in the method storage part 1122, while being made to correspond to the branch circuits or the load apparatuses 4 individually. The reduction method mentioned here is a method of reducing an amount of electric power to be consumed by setting some limitation on use of a branch circuit or a load apparatus 4. Examples of the reduction method include a method of stopping operation of the load apparatus 4 and a method of reducing an operation capacity of the load apparatus 4.

In the correspondence table of the shown example, the reduction methods are represented by codes of "T1", "T2"... with respect to the branch circuits or the load apparatuses 4. That is, as the reduction methods, a plurality of methods is standardized previously, and each method is identified by a code. In the energy management system according to the present embodiment, four methods (first to fourth reduction methods) described below are stored previously, as the reduction methods.

A first reduction method represented by a code of "T1" is a method of shifting a timing, at which electric power is consumed by a corresponding branch circuit or load apparatus 4, from an object time zone (in which the reduction in electric power to be consumed is requested in the reduction request) to another time zone, thereby prohibiting use of the corresponding branch circuit or load apparatus 4 in the object time zone. A second reduction method represented by a code of "T2" is a method of setting an upper limit to a magnitude of electric power to be consumed by a corresponding branch circuit or load apparatus 4, thereby suppressing instantaneous power to be consumed by the corresponding branch circuit or load apparatus 4.

A third reduction method represented by a code of "T3" is a method of setting an upper limit to a length of a time period during which electric power is consumed by a corresponding branch circuit or load apparatus 4, thereby suppressing the time period of supplying the electric power to the corresponding branch circuit or load apparatus 4. A fourth reduction method represented by a code of "T4" is a method of setting an upper limit to an amount of electric power to be consumed by a corresponding branch circuit or load apparatus 4, thereby limiting an integrated value of electric power (the amount of electric power) to be consumed by the corresponding branch circuit or load apparatus 4.

In the example of the correspondence table shown in Fig. 5, the reduction method of "T1" is made to correspond to a load apparatus 4 represented by "apparatus 41", and the reduction method of "T2" is made to correspond to a load apparatus 4 represented by "apparatus 42", and the reduction method of "T1" is made to correspond to a branch circuit represented by "branch M1".

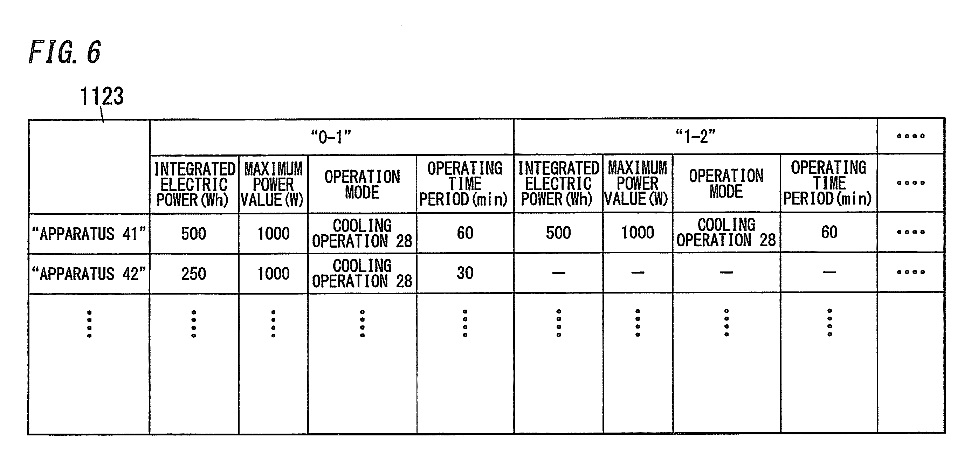

As shown in Fig. 6, the history storage part 1123 is configured to store, by unit time (e.g., one hour), respective electric power amounts, respective maximum power values, respective operation modes (only in a case of a load apparatus 4), respective operating time periods and the like that correspond to the branch circuits or the load apparatuses 4. That is, in the history storage part 1123, the electric power amounts, the maximum power values, the operating time periods and the like are stored by unit time based on the measured values of the communication I/F 1111 as the acquisition part, acquired from the measuring device 5, and further, the operation modes and the like of the load apparatuses 4 acquired by the communication I/F 1115 are stored.

In the example of Fig. 6, the history storage part 1123 stores history data of the respective electric power amounts (integrated electric powers), the respective maximum power values, the respective operation modes and the respective operating time periods, corresponding to the load apparatuses 4 ("apparatus 41", "apparatus 42" ...) by unit time, such as a time zone from 0 a.m. to 1 a.m. ("0 - 1") or a time zone from 1 a.m. to 2 a.m. ("1 - 2"). In the shown example, regarding a history of "apparatus 41" as an air-conditioner, the electric power amount is 500Wh, and the maximum power value is 1000W, and the operation mode is "cooling operation" in which the setting temperature is 28 degrees, and the operating time period is 60 minutes, over both time zones (from 0 a.m. to 1 a.m. and from 1 a.m. to 2 a.m.). Regarding a history of "apparatus 42" as an air-conditioner, the electric power amount is 250Wh, and the maximum power value is 1000W, and the operation mode is "cooling operation" in which the setting temperature is 28 degrees, and the operating time period is 30 minutes, in the time zone (from 0 a.m. to 1 a.m.).

Here, the processing part 110 is configured to write actual values of the electric power amounts and the like into the history storage part 1123, in each the hour clocked by the real time clock 113. The history storage part 1123 has storage capability capable of storing history data for a week. However, those are merely one example. The time interval for writing the history data into the history storage part 1123 may be set to not one hour but 15 minutes or 30 minutes. The history storage part 1123 may be configured to store the history data for not a week but a day or a month.

The processing part 110 is mainly constituted by a device that is configured to operate by executing programs, as a microcomputer, and a function of each part is achieved by executing an appropriate program. As shown in Fig. 1, the communication part 111, the storage part 112 and the real time clock 113 are connected to the processing part 110.

In the present embodiment, the processing part 110 includes: an execution part 1101 that is configured to execute limitation of an amount of electric power to be consumed in response to the reduction request; and a selection part 1102 that is configured to make a user select the reduction methods to be stored in the method storage part 1122.

In response to the reduction request, the execution part 1101 is configured to present the reduction methods to a user, according to the correspondence table stored in the method storage part 1122. As the presentation, the execution part 1101 is configured to display the reduction methods made to correspond to the branch circuits or the load apparatuses 4 individually in the correspondence table, on a screen of the operation display device 12 via the communication I/F 1112. Alternatively, for presentation, the execution part 1101 may be configured to display the reduction methods on a load apparatus 4, or make the load apparatus 4 provide a sound output, via the communication I/F 1115. At this time, the execution part 1101 is configured to present, together with the reduction methods, a reduction content that includes specific setting values and the like.

That is, the execution part 1101 is configured to refer to data related to the degree of the power reduction and the object time zone stored in the request storage part 1121, and present, when a time clocked by the real time clock 113 agrees with the object time zone, the reduction content. At this time, the execution part 1101 determines the setting values in the reduction content so that a reduction rate with respect to a reference value that has been appropriately determined, reaches a reduction rate as the degree of the power reduction stored in the request storage part 1121. This reference value is obtained based on a history of the power consumption amount in the consumer's house in principle, namely, history data stored in the history storage part 1123.

In short, the execution part 1101 is configured to extract, from the history storage part 1123, history data in a time zone (in the previous week) that agrees with the object time zone (in which the reduction in electric power to be consumed is requested), and determine the setting values in the reduction content according to the reduction request, with this extracted history data as the reference value. For example, regarding a load apparatus 4 made to correspond to the reduction method (method of "T2") of setting an upper limit to a magnitude of electric power, when the maximum power value in the same time zone in the previous week is 500W, the execution part 1101 determines the reduction content so as to set 450W as the upper limit, in order to achieve the reduction rate of 10%. The reference value is not limited to be obtained based on the history data in the previous week, as long as it is history data in the same time zone as the object time zone (in which the reduction in electric power to be consumed is requested). For example, the reference value may be obtained based on history data in the same time zone on the previous day. In addition, the reference value is not limited to a value obtained based on history data. For example, the reference value may be a value which is provided as a standard value based on the consumer's family structure or the like.

The execution part 1101 is configured to determine respective reduction contents for all of the branch circuits and the load apparatuses 4 so that a reduction rate with respect to the reference value obtained based on the power consumption amount as the whole of the consumer's house (namely, the electric power amount of the main circuit) reaches a reduction rate stored in the request storage part 1121.

However, the execution part 1101 is not limited to be configured to present the reduction methods. The execution part 1101 may be configured to execute at least one of: presentation of the reduction methods; and actual control of the branch circuits or the load apparatuses 4 according to the reduction methods. That is, when the load apparatuses 4 are configured to be remotely controlled, in addition to the presentation of the reduction methods, the execution part 1101 may be configured to generate control signals according to the reduction methods, and then transmit the control signals to the load apparatuses 4 with the communication I/F 1115 to control the load apparatuses 4. Also, when the branch breakers 22 are configured to be remotely controlled, the execution part 1101 may be configured to transmit control signals to the distribution board 2 with the communication I/F 1114 to control the branch breakers 22. Alternatively, the execution part 1101 may be configured to execute only the actual control of the branch circuits or the load apparatuses 4 according to the reduction methods without the presentation of the reduction methods.

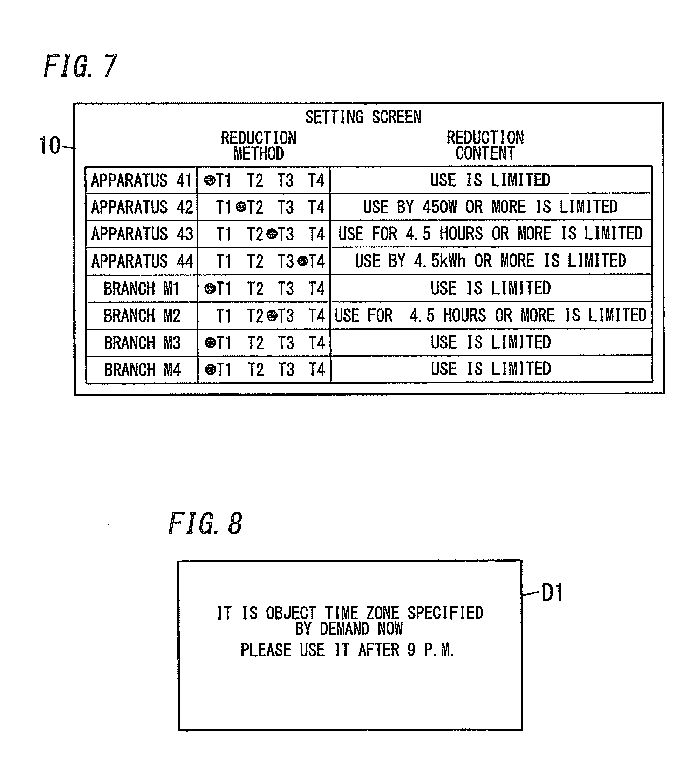

The selection part 1102 is configured to make a user select, from a plurality of predetermined reduction methods, the reduction methods to be stored into the correspondence table in the method storage part 1122 and made to correspond to the branch circuits or the load apparatuses 4 individually. In the present embodiment, the selection part 1102 is configured to generate an image as shown in Fig. 7, and display the image on a setting screen 10 of the operation display device 12 through the communication I/F 1112, and determine the reduction methods to be stored in the method storage part 1122, according to the user's operation to the operation display device 12 in this state. In the shown example, the image on the setting screen 10 is provided for making the user alternatively select, from the four methods of "T1" to "T4", reduction methods to be made to correspond to the branch circuits (branches "M1" to "M4") or the load apparatuses 4 (apparatuses "41" to "44") individually. In the shown example, black dots are displayed on the left side of codes of the currently selected reduction methods.

That is, in the shown example, "T1" has been selected as a reduction method corresponding to the "apparatus 41", and "T2" has been selected as a reduction method corresponding to the "apparatus 42", and "T3" has been selected as a reduction method corresponding to the "apparatus 43", and "T4" has been selected as a reduction method corresponding to the "apparatus 44". Similarly, "T1" has been selected as a reduction method corresponding to the "branch M1", and "T3" has been selected as a reduction method corresponding to the "branch M2", and "T1" has been selected as a reduction method corresponding to the "branch M3", and "T1" has been selected as a reduction method corresponding to the "branch M4".

In this way, the reduction methods selected by the user are stored, as the correspondence table made to correspond to the branch circuits or the load apparatuses 4, in the method storage part 1122, according to the user's operation to the operation display device 12. In short, when the user selects the reduction methods on the setting screen 10 as shown in Fig. 7, the result is reflected in the correspondence table (see Fig. 5) in the method storage part 1122.

Here, in the present embodiment, as shown in Fig. 7, the execution part 1101 has a function of displaying reduction contents including specific setting values and the like on the setting screen 10, when the reduction methods are selected through the setting screen 10 and the correspondence table is stored in the method storage part 1122.

That is, the execution part 1101 is configured to extract, when the correspondence table is stored in the method storage part 1122, as a trigger, extract, from the history storage part 1123, history data in the same time zone in the previous week as the object time zone (in which the reduction in electric power to be consumed is requested), and determine the setting values in the reduction contents according to the reduction request, with the history data as the reference value. Then, the execution part 1101 is configured to report the determined reduction contents to the operation display device 12 via the communication I/F 1112, and display the reduction content corresponding to each of the branch circuits or the load apparatuses 4 on the setting screen 10.

Therefore, through the setting screen 10, the user can previously know what contents for the power reduction are actually executed to the branch circuits or the load apparatuses 4. As a result, when feeling dissatisfied with the displayed reduction contents, the user can change the reduction methods through the setting screen 10 until the user feels satisfied with the displayed reduction contents.

Next, operation of the energy management device 1 will be described when the amount of electric power to be consumed in the consumer's house is limited.

It is first assumed that a load apparatus 4 as a washing machine is made to correspond, in the correspondence table, to the reduction method (method of "T1") of shifting a timing, at which electric power is consumed by the load apparatus 4, from an object time zone (in which the reduction in electric power to be consumed is requested in the reduction request) to another time zone. In this case, when a user operates the washing machine (load apparatus 4) to start the operation of the washing machine in the object time zone, the energy management device 1 is configured to display, on a display screen D1 of the washing machine, a message for allowing the user to use the washing machine after the object time zone (after 9 p.m.), as shown in Fig. 8. In this way, the use of the washing machine in the object time zone is limited, and it is possible to reduce the amount of electric power to be consumed by the washing machine in the object time zone. In a case where the same reduction method (method of "T1") is made to correspond to a branch circuit, the energy management device 1 may limit electric power itself to be consumed in the object time zone, by causing a branch breaker 22 of this branch circuit to carry out a breaking operation (by turning off the branch breaker 22) over the object time zone.

According to this reduction method (method of "T1"), it is possible to save electric power in the object time zone by prohibiting, in the object time zone, use of a load apparatus 4, such as a washing machine, a dishwasher or a clothes dryer, which is allowed to shift a timing of using it as long as its operation is completed by a certain time. In this case, because the energy management device 1 can reduce all the amount of electric power to be consumed by the load apparatus 4 in the object time zone, it is possible to significantly reduce the amount of electric power to be consumed in the object time zone.

Next, it is assumed that a load apparatus 4 as an IH cooker is made to correspond, in the correspondence table, to the reduction method (method of "T2") of setting an upper limit to a magnitude of electric power to be consumed by the load apparatus 4. In this case, when operation of the IH cooker starts in the object time zone, the energy management device 1 is configured to transmit, to the IH cooker, a control signal of setting 1kW as an upper limit of the electric power to be consumed. In this state, when a user operates the IH cooker in the object time zone at a maximum heating power (output) in which the electric power to be consumed is 2kW, the energy management device 1 is configured to allow the IH cooker to output by voice a message of urging the user to perform an operation for suppressing the electric power to be consumed to the upper limit or less. At this time, examples of the output message include a message of "Electric power to be consumed is being limited by demand. Please turn down the heat." and the like.

According to this reduction method (method of "T2"), it is possible to save electric power in the object time zone by limiting the electric power to be consumed in the object time zone by a load apparatus 4, such as an IH cooker or an air-conditioner, in which the power consumption (instantaneous power) is relatively large. Therefore, the energy management device 1 can reduce the amount of electric power to be consumed in the object time zone only by providing a certain limitation to operation of such a load apparatus 4 without completely prohibiting the operation.

Next, it is assumed that a load apparatus 4 as a television (receiver) is made to correspond, in the correspondence table, to the reduction method (method of "T3") of setting an upper limit to a length of a time period during which electric power is consumed by the load apparatus 4. In this case, the energy management device 1 is configured to detect a start of the use of the television in the object time zone, based on a status change notification that is received from the television, or an increase in electric power in a branch circuit to which the television is connected, and activate a timer for clocking a time period that is set as the upper limit, from the start of the use. For example, in a case where the upper limit is 2 hours, when a time period during which the television is used in the object time zone reaches 2 hours, the energy management device 1 is configured to transmit, to the television, a control signal of turning off the television, or turn off a branch breaker 22, to which the television is connected, to turn off the television. The energy management device 1 may be configured to transmit a control signal to the television at the start of the use of the television to make the television activate an off timer so that the television is automatically turned off after 2 hours.

According to this reduction method (method of "T3"), it is possible to save electric power in the object time zone by limiting, in the object time zone, a total use period of a load apparatus 4, such as a television or an air-conditioner, which is used over a relatively-long period. Therefore, the energy management device 1 can reduce the amount of electric power to be consumed in the object time zone only by providing a certain limitation to an operating time period of such a load apparatus 4 without completely prohibiting the operation.

Next, it is assumed that a load apparatus 4 as a television is made to correspond, in the correspondence table, to the reduction method (method of "T4") of setting an upper limit to an amount of electric power to be consumed by the load apparatus 4. In this case, the energy management device 1 is configured to detect a start of the use of the television in the object time zone, based on a status change notification that is received from the television, or an increase in electric power in a branch circuit to which the television is connected, and integrate electric power measured by the measuring device 5 during a time period from the start of the use. At a time point when this integration result (electric power amount) reaches an electric power amount that is set as the upper limit, the energy management device 1 is configured to transmit, to the television, a control signal of turning off the television, or turn off a branch breaker 22, to which the television is connected, to turn off the television.

According to this reduction method (method of "T4"), it is possible to save electric power in the object time zone by limiting, in the object time zone, a total amount of electric power to be consumed by a load apparatus 4, such as a television or an air-conditioner, which is used over a relatively-long period. Therefore, the energy management device 1 can reduce the amount of electric power to be consumed in the object time zone only by providing a certain limitation to an operating time period of such a load apparatus 4 without completely prohibiting the operation thereof.

According to the energy management system of the present embodiment described above, the energy management device 1 includes the selection part 1102 that is configured to make a user select, from a plurality of predetermined reduction methods, the reduction methods to be stored in the method storage part 1122 and made to correspond to the branch circuits or the load apparatuses 4 individually. Therefore, the user can select the reduction methods for the branch circuits or the load apparatuses 4 individually, depending on an actual way of using each load apparatus 4. As a result, the actual way of using each load apparatus 4 is reflected in operation (control) for limiting the amount of electric power to be consumed in the consumer's house, performed by the energy management device 1, and accordingly, it is possible to easily give a user satisfaction regarding the operation for limiting the amount of electric power to be consumed in the consumer's house.

That is, generally, the ways of using the load apparatuses 4 are not uniform, and the ways are different depending on the load apparatuses 4. Also, the ways are different depending on users. For example, regarding a load apparatus 4 as a washing machine, there may be two different ways, depending on users: a way in which washed clothes are dried indoors or dried with a clothes dryer; and a way in which the washed clothes are dried out of doors. That is, in the case of the former way, it is possible to easily give a user satisfaction regarding the first reduction method of shifting a timing, at which the washing machine is used, to save electric power in the object time zone. However, in the case of the latter way, because it is not easy to shift the timing of drying the clothes out of doors, it is hard to easily give a user satisfaction regarding the first reduction method. In such a case, according to the energy management system of the present embodiment, the user can select a reduction method to be made to correspond to the load apparatus 4, depending on the actual way of using the load apparatus 4, and accordingly, it is possible to easily give the user satisfaction regarding the operation for limiting the amount of electric power to be consumed in the consumer's house.

### (Second Embodiment)

An energy management system according to the present embodiment is different from that according to the First Embodiment in reduction methods that are stored in an energy management device 1 in advance. Hereinafter, constituent elements similar to those of the First Embodiment are assigned with same reference numerals, and the explanations thereof are appropriately omitted.

In the present embodiment, in addition to the four methods described in the First Embodiment, a method of limiting an operation mode of a corresponding load apparatus 4 is stored as a reduction method in the energy management device 1 in advance. That is, this reduction method (fifth reduction method) is a method of limiting, in the object time zone, the operation mode of a load apparatus 4 in which one operation mode can be selected from a plurality of operation modes, such as an energy-saving mode (economy mode) and a normal mode, thereby reducing an amount of electric power to be consumed.

When a load apparatus 4 is, for example, a television that is capable of switching a normal mode and an energy-saving mode of suppressing power consumption by changing brightness of a screen, the energy management device 1 is configured to forcibly switch, to the energy-saving mode, the operation mode of the television in the object time zone. Specifically, the energy management device 1 is configured to transmit, to the television, a control signal for switching the operation mode to the energy-saving mode at a start time of the object time zone, and then transmit, to the television, a control signal for switching the operation mode to the normal mode at an end time of the object time zone. In this way, the operation mode of the load apparatus 4 as the television is automatically switched, in the object time zone, to the energy-saving mode in which the power consumption is small, and accordingly, it is possible to reduce the amount of electric power to be consumed in the object time zone.

In a case where a load apparatus 4 is an air-conditioner, the energy management device 1 may be configured to limit a setting temperature or the like, as the operation mode. In a case where a load apparatus 4 is a refrigerator, the energy management device 1 may be configured to limit an inside setting temperature or the like in the refrigerator, as the operation mode. That is, in such load apparatuses 4, the setting temperature, the inside setting temperature and the like correspond to the operation mode, and accordingly, the energy management device 1 can limit the operation mode by changing the setting temperature, the inside setting temperature or the like in the object time zone so that the power consumption is reduced.

According to the configuration of the present embodiment described above, it is possible to save electric power in the object time zone, by switching the operation mode in the object time zone to a mode in which the power consumption is small, regarding a load apparatus 4 having a plurality of operation modes, such as a television, an air-conditioner or a refrigerator. Therefore, the energy management device 1 can reduce the amount of electric power to be consumed in the object time zone only by providing a certain limitation to the operation mode without prohibiting the operation of such a load apparatus 4.

The other configurations and functions are similar to those of the First Embodiment.

Although the present invention has been described with reference to certain preferred embodiments, numerous modifications and variations can be made by those skilled in the art without departing from the true spirit and scope of this invention, namely claims.

## Claims

1. An energy management device, comprising:
an acquisition part configured to acquire, from a measuring device, measured values, as respective power consumption amounts corresponding to branch circuits or load apparatuses in a consumer's facility;
a request input part configured to receive a reduction request for requesting a reduction in an amount of electric power to be consumed in the consumer's facility;
a method storage part configured to store reduction methods for reducing amounts of electric powers to be consumed in the branch circuits or the load apparatuses, the reduction methods being made to correspond to the branch circuits or the load apparatuses individually;
an execution part configured to execute, in response to the reduction request, at least one of presentation of the reduction methods stored in the method storage part, and control of the branch circuits or the load apparatuses according to the reduction methods; and
a selection part configured to make a user select, from a plurality of predetermined reduction methods, the reduction methods to be stored in the method storage part and made to correspond to the branch circuits or the load apparatuses individually.

2. The energy management device according to claim 1, further comprising a history storage part configured to store history data of the respective power consumption amounts corresponding to the branch circuits or the load apparatuses,
wherein the execution part is configured to, when the reduction methods selected by the user are stored in the method storage part, as a trigger, determine respective setting values corresponding to the branch circuits or the load apparatuses so as to achieve the reduction request, with the history data stored in the history storage part, as a reference value, and
wherein the selection part is configured to present the setting values to the user.

3. The energy management device according to claim 2,
wherein the reduction request includes at least information related to an object time zone in which the reduction in electric power to be consumed is requested, and
wherein the execution part is configured to extract, from the history storage part, the history data in a time zone that agrees with the object time zone, and determine the setting values with the extracted history data as the reference value.

4. The energy management device according to any one of claims 1 to 3,
wherein the plurality of predetermined reduction methods includes a method of shifting a timing, at which electric power is consumed by a corresponding branch circuit or load apparatus, from a time zone, in which the reduction in electric power to be consumed is requested in the reduction request, to another time zone.

5. The energy management device according to any one of claims 1 to 4,
wherein the plurality of predetermined reduction methods includes a method of setting an upper limit to a magnitude of electric power to be consumed by a corresponding branch circuit or load apparatus.

6. The energy management device according to any one of claims 1 to 5,
wherein the plurality of predetermined reduction methods includes a method of setting an upper limit to a length of a time period during which electric power is consumed by a corresponding branch circuit or load apparatus.

7. The energy management device according to any one of claims 1 to 6,
wherein the plurality of predetermined reduction methods includes a method of setting an upper limit to an amount of electric power to be consumed by a corresponding branch circuit or load apparatus.

8. The energy management device according to any one of claims 1 to 7,
wherein the plurality of predetermined reduction methods includes a method of limiting an operation mode of a corresponding load apparatus.

9. An energy management system, comprising:
a measuring device to be attached to a distribution board installed in a consumer's facility, or load apparatuses to be used in the consumer's facility, to measure an amount of electric power; and
the energy management device according to any one of claims 1 to 8.
